## Europäisches Patentamt

(19) **European Patent Office**

**Office européen des brevets**

(11) Veröffentlichungsnummer: **0 085 374**
**B1**

---

(12) ## EUROPÄISCHE PATENTSCHRIFT

(45) Veröffentlichungstag der Patentschrift:
**08.01.86**

(51) Int. Cl.⁴: **F 24 F 13/00**

(21) Anmeldenummer: **83100578.0**

(22) Anmeldetag: **23.01.83**

---

(54) **Verankerungsvorrichtung, insbesondere von Zu- und Abluftventilen in Ventilationskanälen.**

---

(30) Priorität: **29.01.82 SE 8200488**

(43) Veröffentlichungstag der Anmeldung:
**10.08.83 Patentblatt 83/32**

(45) Bekanntmachung des Hinweises auf die Patenterteilung:
**08.01.86 Patentblatt 86/2**

(84) Benannte Vertragsstaaten:
**AT BE CH DE FR GB IT LI NL SE**

(56) Entgegenhaltungen:
**FI - A - 59 299**
**GB - A - 637 357**
**GB - A - 734 857**
**SE - A - 391 384**

(73) Patentinhaber: **Fläkt Aktiebolag, Sickla Allé 13,
S-131 34 Nacka (SE)**

(72) Erfinder: **Widerby, Lennart, Syréngatan 5,
S-552 65 Jönköping (SE)**

(74) Vertreter: **Siebmanns, Sigrid, Götalands Patentbyra AB
Box 154, S-561 22 Huskvarna (SE)**

---

## Beschreibung

Die Erfindung bezieht sich auf eine Arretierungsvorrichtung gemäss dem Oberbegriff des Anspruchs 1.

Zu- und Abluftventile sollen oft in Öffnungen von Ventilationskanälen verschiedener Weite oder Durchmesser und sogar verschiedener Ausführung angebracht werden. Weiterhin können deren Öffnungen oft rauh und uneben sein, z.B. in Form üblicher Mauerwerksöffnungen, oder es können wechselnde Unregelmässigkeiten vorkommen.

Die Schwierigkeiten vergrössern sich erheblich, wenn das Ventil o.ä., das in oder an einer solchen Öffnung angebracht werden soll, sich nicht mittels eines zylindrischen Stutzens o.ä. mit einem besonderen, ausdehnungsfähigen Organ zum Festhalten des Ventils o.ä. fortsetzt, und wenn es nicht geklebt oder festgeschraubt werden kann oder soll.

Das Problem ist bekannt, und man hat es bisher z.B. mittels elastischer Bügel gelöst, die sich dadurch abstützen, dass sie an der Unebenheit oder einem anderen Widerlager in der Öffnung anliegen, wobei sie aufgrund ihrer Elastizität knicken und die Bügel z.B. einen Ventilflansch gegen das die Öffnung umgebende Wandmaterial zur Anlage bringen.

Derartige Arretierungsanordnungen sind unbefriedigend, da sie zu kompliziert, teuer und manchmal unzuverlässig sind.

Weiterer Stand der Technik ergibt sich aus der SE-B-391 384 und der FI-B-59 299. Hierbei sind ein zylindrischer bzw. konischer Fortsatz eines Ventils oder dergleichen mit etwa tangential angeordneten, federnden Blättern versehen, die beim Gegenstand der ersten Schrift nur in axialer Richtung wirken. Auch wenn die freien Enden der Blätter an der Öffnungswandung anliegen würden, so wäre ein Eindringen in Vertiefungen oder andere Unebenheiten kaum möglich, da der in die genannte Öffnung eindringende Ventilfortsatz oder dergleichen die Öffnung natürlich ohne allzu grosses Spiel ausfüllen soll, was bedeutet, dass die Blätter zum beinahe völlig flachen peripheren Anliegen an den genannten Ventilfortsatz oder dergleichen abgebogen werden, so dass nur mehr die flachen Blattaussenseiten zur Wirkung kommen, wodurch eine effektive Arretierung in den meisten Fällen nicht möglich ist. Ähnlich verhält es sich beim Gegenstand der zweiten Schrift, wobei man zwar die freien Blattenden nach aussen abgebogen angeordnet hat, aber gerade eine solche Abbiegung ist sehr unvorteilhaft, da die spätere elastische Beanspruchung der Blätter in einer der Biegerichtung entgegengesetzten Richtung erfolgt, was leicht zu Ermattung und Bruch im Bereich der Biegestelle führen kann. Auch dürfte die Elastizität dieser Blätter sehr begrenzt sein, wenn man nicht einen Bruch riskieren will. Insbesondere ist man stets dem Dilemma ausgesetzt, dass man bei mehr tangentialer Anordnung der Blätter, wie dies in engen Öffnungen zwangsläufig der Fall sein wird, keine Eindringmöglichkeiten in kleinere Vertiefungen und Unebenheiten hat, während bei mehr radialer Ausrichtung der Blätter zwar eine gewisse Eingreifmöglichkeit in Vertiefungen besteht, aber in einem solchen Falle keine befriedigende Elastizität vorliegt aufgrund des stumpfen Winkels, worüberhinaus in einem solchen Falle stets ein bedeutender Zwischenraum zwischen einem Ventilfortsatz oder dergleichen und der umgebenden Öffnung vorzuliegen hat. Ferner kann es sich oft so verhalten, dass Vertiefungen bzw. Unebenheiten in genannter Öffnung unregelmässig verteilt sind, so dass selbst eine spitze Ausführung der freien Blattenden oft nicht zur Wirkung kommt, wobei natürlich bei mehr tangentialer oder peripherer Ausrichtung einer solchen Blattspitze deren spezielle Ausführung im wesentlichen nicht zum Tragen kommt.

Der Erfindung liegt die Aufgabe zugrunde, eine neue Arretierungsvorrichtung zu schaffen, die einfach und zuverlässig ist, sich schnell, auf einfache Weise und preiswert herstellen und anbringen lässt, und die besonders eine Anbringung des Ventils o.ä. ohne z.B. in die Ventillationskanalöffnungen hineinragenden, zylindrischen Stutzen erlaubt. Insbesondere obliegt es der Erfindung, mit nur einer Ausführung einer Arretierungsvorrichtung eine gleichbleibend vorteilhafte Arretiermöglichkeit in Öffnungen unterschiedlicher Weite und mit unterschiedlicher Art und Ausführung der die Öffnung bildenden Wandung zu schaffen, so dass stets eine schnelle und gleichbleibende sichere Anbringung und trotzdem möglichst auch eine ebensolche Entfernung der Vorrichtung vorgenommen werden kann. Ausserdem soll der bei dieser Technik vorhandene Stand generell weitergebildet werden.

Diese Aufgabe wird durch die im Kennzeichen des Anspruchs 1 aufgeführten Merkmale gelöst.

Die Erfindung weist gegenüber dem Bekannten die Vorteile auf, dass ein Zu- oder Abluftventil o.ä. selbst ohne Einführstutzen oder dergleichen unmittelbar in einer Öffnung eines Kanals mit ebener oder sogar stark unregelmässig unebener Innenwandung befestigt werden kann. Die Aufteilung des Blattes eines erfindungsgemässen Verankerungsorgans in mehrere Zungen bringt den Vorteil mit sich, dass jede Zunge individuell wirken und sich bestmöglich dem Verankerungsgebiet anpassen kann, wobei die an sich bekannte, zur tangentialen Einrichtung tendierende Erstreckung der Zungen eine zweckmässige elastische Abbiegung jeder Zunge in radialer Richtung ermöglicht und ferner die wenigstens angenähert spitze Ausführung und Abwinklung nach aussen der freien Zungenenden zu im wesentlichen radialer Einrichtung ein leichtes und effektives Eindringen auch in kleinere und unregelmässig angeordnete Vertiefungen in der Öffnungswandung ermöglicht oder beim Fehlen von solchen Vertiefungen eine punktförmige Friktionsarretierung durch genannte Zungenspitzen in z.B. einem zylindrischen Rohrstutzen oder dergleichen ermöglicht. Auf diese Weise erhält man gleichzeitig eine effektive Verankerung oder Festlegung gegen sowohl axiale als auch periphere Bewegungen im Verhältnis zur Öffnung. Auch lässt sich sagen, dass das gesamte Verankerungsorgan sich mit grösserer Haltekraft ausführen lässt im Verhältnis zu einem vorbekannten ungeteilten Blatt, da die Zungen individuell wirken können und jeweils für sich geringeren elastischen Widerstand erbringen. Weitere, vorteilhafte Ausgestaltungen der Erfindung gehen aus der nachfolgenden Beschreibung und den Zeichnungen hervor.

Die Erfindung wird an Ausführungsbeispielen anhand von Zeichnungen erläutert. Es zeigen:

Fig. 1 eine perspektivische Ansicht eines Ausführungsbeispiels einer erfindungsgemässen Arretierungsvorrichtung mit erfindungsgemässen Verankerungsorganen,

Fig. 2 bis 5 schematisch die Wirkungsweise der Teile der erfindungsgemässen Arretierungsvorrichtung bei Anwendung in einer Öffnung verschiedenen Aussehens sowie verschiedener Eigenschaften und Durchmesser,

Fig. 6 eine Seitenansicht eines ersten etwa abgeänderten Ausführungsbeispiels eines Verankerungsorgans mit etwa gleich breiten Zungen,

Fig. 7 ein weiteres Ausführungsbeispiel eines Verankerungsorgans mit verschieden breiten Zungen,

Fig. 8 ein weiteres Ausführungsbeispiel eines Verankerungsorgans mit gleich breiten Zungen und abgeänderten Zungenspitzen,

Fig. 9 ein weiteres Ausführungsbeispiel des Verankerungsorgans mit gleich breiten Zungen und abgeänderten Zungenspitzen,

Fig. 10 ein weiteres Ausführungsbeispiel eines Verankerungsorgans mit verschieden breiten Zungen und fein gezahnten Zungenspitzen,

Fig. 11 ein weiteres Ausführungsbeispiel eines Verankerungsorgans mit breiten Zungen und einer Vielzahl von Zungenspitzen an jeder dieser Zungen,

Fig. 12 eine Seitenansicht der Verankerungsorgane nach den Fig. 1 und 6 bis 11, und

Fig. 13 bis 17 weitere Ansichten der Ausführungsform gemäss Fig. 6 und 12 von verschiedenen Seiten.

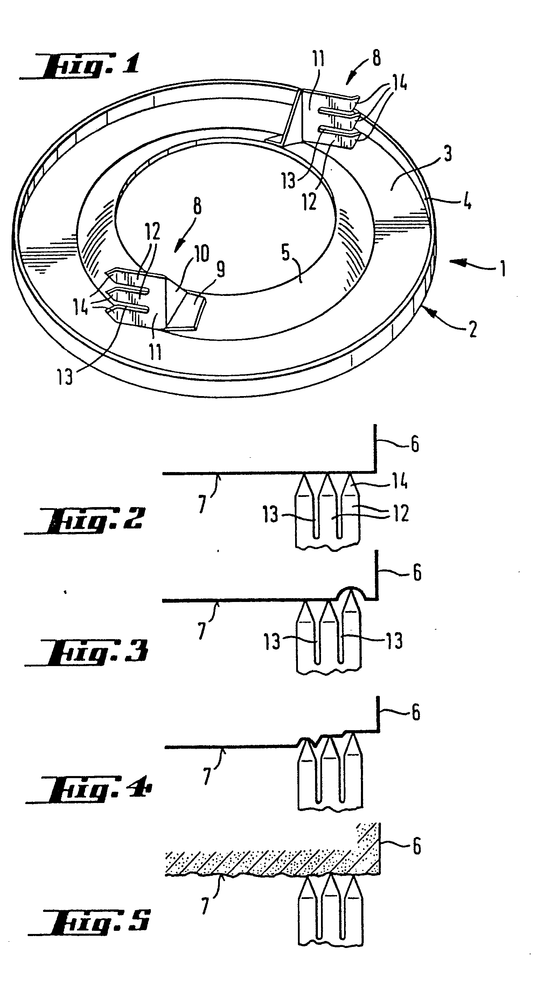

In Fig. 1 ist eine komplette, erfindungsgemässe Arretierungsvorrichtung 1 mit einem in der Zeichnung teilweise dargestellten Ventil 2 o.ä. gezeigt, welches natürlich irgendein Organ oder Element sein kann, das verankert werden muss, und das in dem gezeigten Fall einen Flansch 3 mit einem äusseren, nach hinten gebogenen Kragen 4 umfasst und einen nach innen gekehrten ringförmigen Sitz 5, der auf der Rückseite z.B. konvex ist. Ein solches Ventil, Ventilteil o.ä. kann an einer Wand 6 o.ä. oder in einer Öffnung 7, z.B. eines Ventilationskanals für Frisch- oder Abluft, angebracht werden. Die Bezugszeichen 6 und 7 können auch Flansch und Einsatz eines Rohrstutzens oder dergleichen bezeichnen.

Zu diesem Zweck ist das Ventil 2 o.ä. mit z.B. zwei Verankerungsorganen 8 aus z.B. Federstahl und/oder Kunststoff versehen, die in dem gezeigten Fall mittels einer Basis 9 auf der Rückseite des Sitzes 5 befestigt sind, z.B. durch Schweissen, Kleben, Nieten oder auf andere Weise. Die Basis 9 kann etwa rechteckig und eben oder beliebig winklig oder konkav/konvex mit Hinblick auf eine gute, z.B. konturfolgende, Anlage auf der Unterlage ausgeführt sein.

Von der Basis und damit vom Sitz 5 o.ä. aus erstreckt sich ein Mittelstück 10, das in dem gezeigten Fall dreieckig ausgeführt ist, wobei die eine Dreieckseite an die Basis angrenzt und in diese übergeht, während die andere, vorzugsweise die Hypotenuse, an ein weiter unten beschriebenes Blatt 11 angrenzt und in dieses übergeht, während die verbleibende Dreieckseite frei ist und in diesem Fall in Richtung auf die Öffnung des Sitzes zeigt. Das Mittelstück und die Basis schliessen vorzugsweise einen grösseren Winkel als 90°, z.B. ungefähr 120°, ein. Natürlich kann dieser Winkel auch kleiner sein als 90°, z.B. bis hinunter zu 60°, und er wächst bei Belastung.

Das Blatt 11 (Fig. 1) ist vorzugsweise etwa rechteckig ausgeführt und in Zungen 12 durch Schlitzen von den freien Enden her, nämlich durch die Bildung von Schlitzen 13, aufgeteilt, die aber nicht bis zum Mittelstück 10 reichen. Auf diese Weise werden Beanspruchungen der einzelnen Zungen auf einen grösseren Ansatzbereich des Blattes übertragen und demnach nicht primär auf den empfindlicheren, beispielsweise geknickten Übergangsbereich zwischen Blatt und Mittelteil. Die freien Enden des Blattes 11 oder der Zungen 12 sind vorzugsweise als Zungenspitzen 14 ausgebildet, die ausserdem am besten nach aussen weggebogen sind, z.B. in einem Winkel von 30° bis 60° zur Blattebene in Richtung weg von dem Sitz 5. Das Blatt 11 und das Mittelstück 10 schliessen einen Winkel miteinander ein, der vorzugsweise grösser als 90°, z.B. ungefähr 120°, ist.

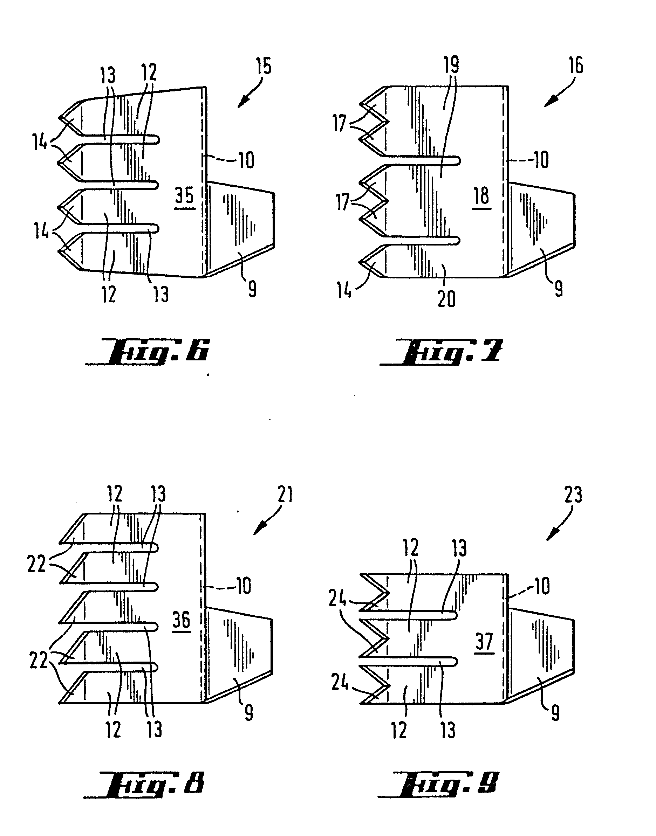

Die äussere Dreieckseite des Mittelstücks, d.h. die Ansatzlinie für das Blatt, ist beim Ausführungsbeispiel jedenfalls parallel relativ zur Ventilachse oder vorzugsweise schwach gegen sie geneigt in Richtung auf die freie, äussere Dreieckspitze, und folglich ist das gesamte Blatt parallel oder etwas geneigt in Richtung gegen die Ventilachse vom Sitz weg, wobei eine durch die Zungenspitzen gehende Linie vorzugsweise zu genannter Seite oder Linie angenähert parallel verläuft, was bedeutet, dass eine solche Arretierungsvorrichtung leicht in eine Öffnung 7 (Fig. 2-5) eingeführt werden kann. Ferner sind mehrere Verankerungsorgane angebracht, die am besten mit gleicher Halterichtung in Umfangsrichtung ausgerichtet sind, so dass man die Arretierungsvorrichtung leicht schieben und schrauben bzw. drehen kann. Beim Anbringen einer solchen Arretierungsvorrichtung sind die Zungenspitzen 14 weiter von der zentralen Achse des Ventils als die Ansätze der Blätter entfernt, z.B. 5 bis 10 mm weiter, so dass das Verankerungsorgan mit den weniger elastischen Blattansätzen in die Öffnung 7 hineingedrückt werden kann, vorzugsweise ohne erhebliche elastische Deformation des Mittelstücks im Verhältnis zur Basis, während die Zungen und insbesondere ihre Spitzen elastisch in Richtung auf die zentrale Achse des Ventils gedrückt werden, wie aus Fig. 3 bis 5 hervorgeht. Dank dem jeweils aufgeschlitzten Blatt und auch den spitz ausgeführten freien Enden greifen die einzelnen Zungen 12 leicht individuell mit wenigstens angenähert radial ausgerichteten Spitzen in die tiefsten Unebenheiten in der Öffnung 7 ein, so dass eine gute und sichere Verankerung der gesamten Anordnung automatisch garantiert ist. Die Ebene des Blattes liegt in einer Zwischenposition zwischen radialer und tangentialer Erstreckung, wobei Belastungen das Blatt stärker in Richtung einer tangentialen Lage abbiegen.

Während in Fig. 2 eine ebene Wandung, also Öffnung 7, eines Ventilationskanals dargestellt ist, zeigen die Fig. 3, 4 und 5 verschiedene Arten von Unebenheiten, Nuten oder dergleichen in der Öffnung oder dem Rohrstutzen 7 eines Ventilationskanals. Man sieht daraus deutlich, wie die einzelnen Zungen 12 in die verschieden tiefen Stellen der unebenen Wandung des Ventilationskanals individuell eingreifen können.

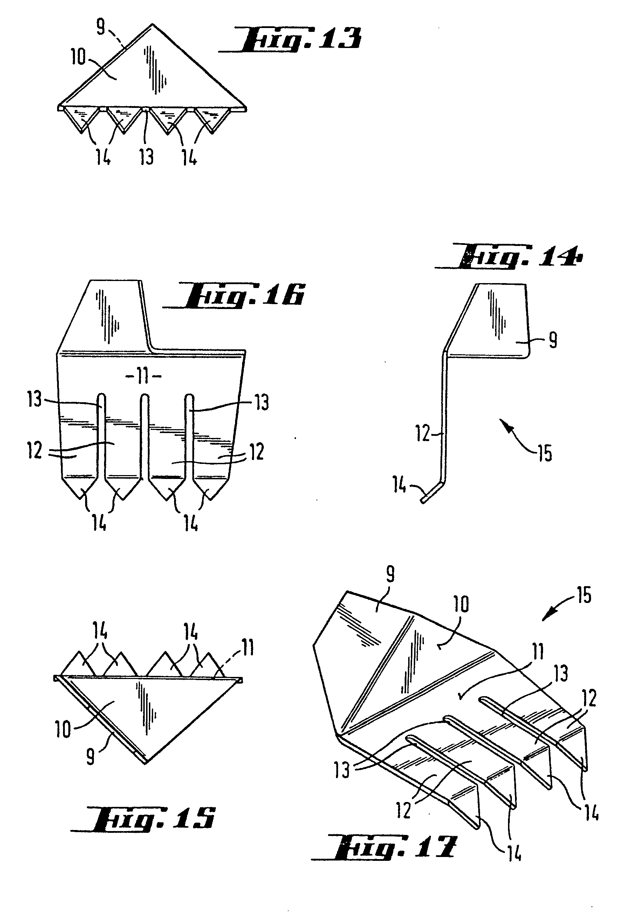

Ein erfindungsgemässes Verankerungsorgan kann leicht durch einfache Stanz- und/oder Biegevorgänge bzw. durch Formspritzen hergestellt werden, und auch die Anbringung bereitet kein weiteres Problem. Die Ausgestaltung der Verankerungsorgane kann je nach Bedarf und individuellen Wünschen variiert werden, wie dies aus den Fig. 6 bis 17 hervorgeht. Hierdurch kann man die verschiedenen Eigenschaften auswählen und steuern, z.B. die Elastizität, die Einführungseigenschaften, den Verankerungsbereich, was für den Einbau in einen Ventilationskanal oder eine beliebige Öffnung erwünscht oder notwendig ist, verschieden tiefe und variierende Punktarretierung in Zusammenhang mit der Wahl geeigneter Anzahl von Zungenspitzen usw.

Während bei jedem aus Fig. 1 ersichtlichen Verankerungsorgan 8 drei etwa gleich breite Zungen 12 verwendet sind, weist ein anderes Ausführungsbeispiel eines Verankerungsorgans 15 (Fig. 6) ein Blatt 35 mit vier Zungen auf, die gegenseitig durch die Schlitze 13 voneinander getrennt sind. Dieses Verankerungsorgan 15 kann wegen seiner vier Anlagepunkte einen noch besseren Halt bieten als das aus der Fig. 1 ersichtliche. Hierbei kann insbesondere die Aussenkante der basisfernen Aussenzunge schräg verlaufen, so dass der betreffende Zungenansatz zuerst in die Öffnung 7 eindringt, was die Einführung erleichtert.

Aus Fig. 7 ist ein anderes Verankerungsorgan 16 zu sehen, dessen Blatt 18 mit zwei breiteren Zungen 19 und einer schmaleren Zunge 20 versehen ist, wobei jede der breiteren Zungen 19 mit jeweils zwei Zungenspitzen 17 und die schmalere Zunge 20 mit einer einzigen Zungenspitze 14 versehen sind.

Ein anderes Ausführungsbeispiel eines Verankerungsorgans 21 zeigt die Fig. 8. Das Verankerungsorgan 21 ist mit fünf z.B. gleich breiten Zungen eines Blattes 36 ausgestattet, die durch Schlitze voneinander getrennt sind und an ihren freien Enden asymmetrische, z.B. einseitig abgeschrägte Zungenspitzen 22 haben. Dies kann im Einzelfall vorteilhaft sein, weil das Stanzwerkzeug zum Herausstanzen des Verankerungsorgans 21 einfach ausgeführt sein kann.

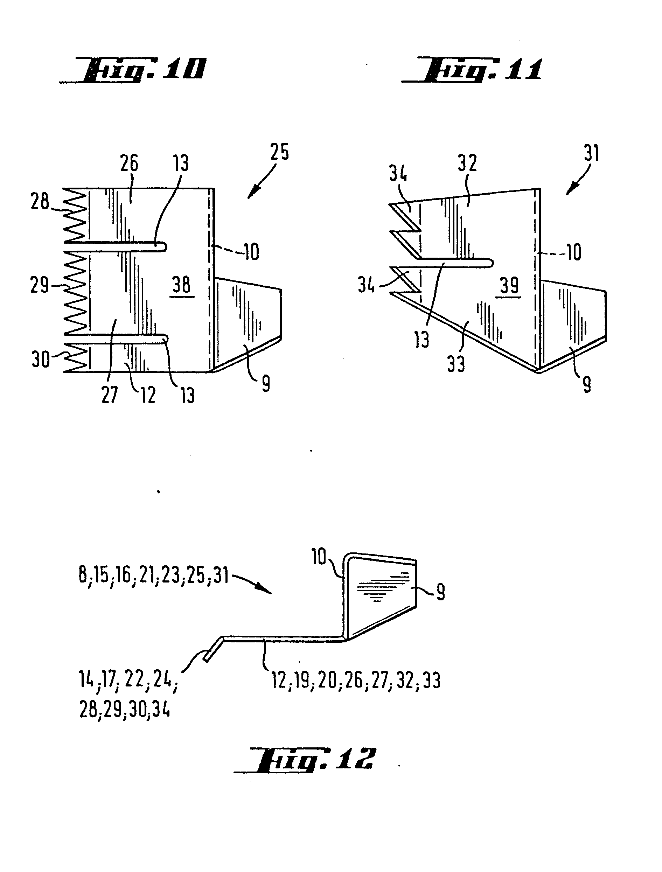

Fig. 9 zeigt ein weiteres Ausführungsbeispiel eines Verankerungsorgans 23, dessen Zungen durch Schlitze voneinander getrennt und etwa gleich breit sind und schwalbenschwanzförmige Zungenspitzen 24 aufweisen. Auch bei diesem Verankerungsorgan liegt jede Zunge, ähnlich wie bei dem Ausführungsbeispiel nach Fig. 7, wo zwei Zungen ähnliche Eigenschaften haben, jeweils an zwei Auflagepunkten an. Hierdurch wird die Haltekraft des Verankerungsorgans 23 vorteilhaft verbessert.

Bei einem weiteren Ausführungsbeispiel eines Verankerungsorgans 25 nach Fig. 10 sind bei einem Blatt 38 zwei relativ breite, jedoch verschieden breite Zungen 26, 27 und eine relativ schmale Zunge 12 vorgesehen. Die Zungen sind durch Schlitze voneinander getrennt. Die an allen Zungen vorgesehenen Zungenspitzen 28, 29, 30 sind mehrzackig ausgeführt und sichern hierdurch einer jeden Zunge 12, 26, 27 eine vielfache Auflage an der Wandung der Öffnung, in der die Arretierungsvorrichtung verankert werden soll. Die beiden relativ breiten Zungen 26, 27 sind aufgrund ihrer Breite mit relativ steifen Materialeigenschaften ausgestattet und führen auch von daher zu vergrösserten Haltekräften gegenüber den weiter oben beschriebenen, schmalen Zungen.

Aus Fig. 11 ist ein anderes Ausführungsbeispiel eines Verankerungsorgans 31 ersichtlich, dessen Blatt 39 mit zwei relativ breiten Zungen 32, 33 versehen ist, die an ihren freien Enden jeweils zwei asymmetrische Zungenspitzen 34 haben. Die relativ breiten Zungen 32, 33 sichern eine grosse Steifigkeit des Materials, die Zungenspitzen 34 stellen eine mehrfache, punktförmige Auflage am Wandmaterial in der Öffnung her, in der die Arretierungsvorrichtung angebracht werden soll. Die Aussenkante der Innenzunge verläuft schräg, so dass die Verankerung erst weiter in der Öffnung beginnt und gleichzeitig den Teilen 2-5 mehr Platz gegeben wird.

Aus Fig. 12 ist eine Seitenansicht der Verankerungsorgane 11, 15, 16, 21, 23, 25, 31 zu sehen. Man erkennt daran auch einen gegenüber dem ebenen Verlauf der betreffenden Zungen abgewinkelten Zungenspitzenverlauf. Alle Zungenspitzen der beschriebenen Ausführungsbeispiele sind dementsprechend vorzugsweise abgewinkelt.

Die oben beschriebenen und in den Zeichnungen dargestellten Ausführungsbeispiele deuten an, dass der Vielfalt der Ausführungen des Erfindungsgegenstands keinerlei Grenzen gesetzt sind. Dementsprechend kann man Dimensionierungen, Formgebungen und Winkel auswählen und variieren, im Extremfall könnte man sogar bis auf die Zungenspitzen ein vollkommen planes Verankerungsorgan verwenden, besonders in Anwendung auf vollkommen zylindrische Ventilteile oder ähnliches, die in die Öffnung einzusetzen sind. Eventuell können die freien Blattenden in einem solchen Fall schief verlaufen, und sie könnten weniger stark gegenüber der Ventilachse gekippt sein. Die gezeigten und beschriebenen Biegungen oder Knicke und Winkel und auch ebene Teile lassen sich natürlich durch z.B. weitschweifige Rundungen ersetzen. Ferner lassen sich die erfindungsgemässen Verankerungsorgane auch integriert als direkte Teile der Arretierungsvorrichtung vorsehen. Auch können die Zungenspitzen beliebig ausgeführt, z.B. gerundet sein. Die Merkmale einzelner Ausführungsformen lassen sich beliebig kombinieren.

**Patentansprüche**

1. Arretierungsvorrichtung (1) für die Verankerung von einem Ventil oder dergleichen, insbesondere einem Zu- oder Abluftventil (2), in einer Öffnung (7) oder einem Einsatz eines Ventilationskanals in einer Wand (6), mit wenigstens einem Verankerungsorgan (8) zum elastischen Anliegen an der die Öffnung (7) umgebenden Wand, wobei das Verankerungsorgan (8) eine am Ventil oder dergleichen (2) angeordnete Basis (9) aufweist, von der ein federndes Blatt (11; 18; 35-39) in Umfangsrichtung der Öffnung (7) abragt, dadurch gekennzeichnet, dass das Blatt (11; 18; 35-39) in Zungen (12; 19, 20; 26, 27; 32, 33) aufgeteilt ist und dass die freien Zungenenden (14; 17; 22; 28-30; 34) spitz ausgeführt und radial nach aussen zur Öffnung (7) hin abgewinkelt sind.

2. Arretierungsvorrichtung nach Anspruch 1, dadurch gekennzeichnet, dass zwischen der Basis (9) und dem Blatt (11; 18; 35-39) ein Mittelstück (10) angeordnet ist, das vorzugsweise dreieckförmig ist, wobei die eine Dreieckseite an die Basis angrenzt und in diese übergeht, während die andere Dreieckseite, vorzugsweise die Hypotenuse, an das Blatt angrenzt und in dieses übergeht, während die verbleibende Dreieckseite frei ist.

3. Arretierungsvorrichtung nach Anspruch 2, dadurch gekennzeichnet, dass das Mittelstück (10) und die Basis (9) einen Winkel von 60° bis 180° einschliessen, vorzugsweise 90° bis 120°, und/oder dass das Mittelstück und das Blatt (11; 18; 35-39) einen Winkel von etwa 120° einschliessen.

4. Arretierungsvorrichtung nach Anspruch 1, dadurch gekennzeichnet, dass die Zungen (12; 19, 20; 26, 27; 32, 33) durch Schlitze (13) voneinander getrennt sind, welche sich vom freien Blattende in Richtung auf den Blattansatz erstrecken, jedoch vorzugsweise ohne diesen zu durchsetzen.

5. Arretierungsvorrichtung nach Anspruch 2, dadurch gekennzeichnet, dass bei dem als Dreieck ausgeführten Mittelstück (10) die äussere Dreieckseite, die mit der Ansatzlinie des Blattes (11; 18; 35-39) zusammenfällt, etwa parallel zu der Zentrumachse des Ventils oder dergleichen (2) bzw. der Öffnung (7) verläuft oder schwach zu dieser Achse geneigt ist in Richtung vom Ventil oder dergleichen weg, wobei eine durch die Zungenspitzen (14; 17; 22; 28-30; 34) verlaufende Linie vorzugsweise angenähert parallel zu genannter Dreieckseite oder Ansatzlinie verläuft.

6. Arretierungsvorrichtung nach einem der Ansprüche 1-5, dadurch gekennzeichnet, dass bei Anordnung von mehreren Verankerungsorganen (8) diese auf an sich bekannte Weise in die gleiche Richtung in Umfangsrichtung gewendet sind zwecks Ermöglichung von Ein- und Ausschieben oder -schrauben der Arretierungsvorrichtung, und dass die äussere Längsseite der äussersten, von der Basis (9) abgewendeten Zunge schräg in Richtung zur betreffenden Zungenspitze unter Annäherung an das Ventil oder dergleichen (2) verläuft, so dass der betreffende Zungenansatz beim Anbringen des Ventils oder dergleichen zuerst in die Öffnung (7) eindringt.

7. Arretierungsvorrichtung nach Anspruch 1, dadurch gekennzeichnet, dass die Zungen (12; 19, 20; 26-27; 32, 33) verschieden breit ausgeführt sind.

8. Arretierungsvorrichtung nach Anspruch 1, dadurch gekennzeichnet, dass die Zungenspitzen (14; 17; 24; 28-30) symmetrisch an den betreffenden Zungen (12; 19, 20; 26, 27) angeordnet sind.

9. Arretierungsvorrichtung nach Anspruch 1, dadurch gekennzeichnet, dass die Zungenspitzen (22; 34) an den betreffenden Zungen (12; 32,33) asymmetrisch angeordnet sind.

10. Arretierungsvorrichtung nach einem der Ansprüche 1-9, dadurch gekennzeichnet, dass die Zungenspitzen (17; 24; 28-30; 34) mehrfach an den betreffenden Zungen (12; 19, 20; 26, 27; 32, 33) angeordnet sind.

**Claims**

1. Locking means (1) for anchoring a valve or the like, particularly an air inlet or exhaust valve (2), in an opening (7) or an insert in a ventilation duct in a wall (6), having at least one anchoring element (8) for elastic abutment with the defining wall of the opening (7), said anchoring element (8) presenting a base (9) which is arranged on the valve or the like (2) and from which a sprung wing-like element (11; 18; 35-39) projects outwardly in the circumferential direction of the opening (7), characterized in that the wing-like element (11; 18; 35-39) is divided into tongues (12; 19, 20; 26, 27; 32, 33) and in that the free ends of the tongues (14; 17; 22; 28-30; 34) are pointed and angled radially outwardly towards the opening (7).

2. A locking means according to Claim 1, characterized in that located between the base (9) and the wing-like element(11; 18; 35-39) is an intermediate part (10), which is preferably of triangular configuration, wherewith one triangle side borders on and merges with the base, and another triangle side, preferably the hypotenuse, borders on and merges with the wing-like element, whereas the remaining triangle side is free.

3. A locking means according to Claim 2, characterized in that the intermediate part (10) and the base (9) enclose an angle of 60-180°, preferably 90-120°, and/or that the intermediate part and the wing-like element (11; 18; 35-39) enclose an angle of roughly 120°.

4. A locking means according to Claim 1, characterized in that the tongues (12; 19, 20; 26, 27; 32, 33) are mutually separated by means of slots (13) which extend from the free wing end towards the root of the wing-like element although preferably without penetrating said root.

5. A locking means according to Claim 2, characterized in that the outer triangle side of the triangular intermediate part (10) coinciding with the root line of the wing-like element (11; 18; 35-39) extends approximately parallel with the centre axis of the valve or the like (2) and the opening (7), respectively, or is slightly inclined to this axis away from the valve or the like wherewith a line passing through the tips (14; 17; 22; 28-30; 34) of the tongues preferably extends approximately parallel with said triangle side or said root line.

6. A locking means according to any one of Claims 1-5, characterized in that when mounting a plurality of anchoring element (8) said elements are turned to face in the same direction in a conventional manner in the said circumferential direction, to permit the locking means to be inserted and withdrawn or screwed in and out; and in that the outer long side of the outer-most tongue remote from the base (9) extends obliquely in the direction towards respective tongue tips while approaching the valve or the like (2), so that respective tongue roots penetrate the opening (7) first when mounting the valve or the like.

7. A locking means according to Claim 1, characterized in that the tongues (12; 19, 20; 26-27; 32, 33) have mutually different widths.

8. A locking means according to Claim 1, characterized in that the tongue tips (14; 17; 24; 28-30) are symmetrically arranged on respective tongues (12; 19, 20; 26, 27).

9. A locking means according to Claim 1, characterized in that the tongue tips (22; 34) are asymmetrically arranged on respective tongues (12; 32, 33).

10. A locking means according to any one of Claims 1-9, characterized in that the tongue tips (17; 24, 28-30; 34) are multiply arranged on respective tongues (12; 19, 20; 26, 27; 32, 33).

**Revendications**

1. Dispositif d'arrêt (1) pour l'ancrage d'une soupape ou analogue, en particulier d'une soupape d'amenée ou d'évacuation d'air (2) dans un orifice (7) ou dans un élément d'insertion d'un conduit de ventilation dans un mur (6), avec au moins un organe d'ancrage (8) pour application élastique contre la paroi entourant l'orifice (7), l'organe d'ancrage (8) comportant une base (9) disposée sur la soupape ou analogue (2) et de laquelle une patte élastique (11; 18; 35-39) s'étend en saillie en direction périphérique de l'orifice (7), caractérisé en ce que la patte (11; 18; 35-39) est subdivisée en languettes (12; 19, 20; 26, 27; 32, 33) et en ce que les extrémités de languette libres (14; 17; 22; 28-30; 34) sont réalisées de façon à être pointues et radialement coudées vers l'extérieur en direction de l'orifice (7).

2. Dispositif d'arrêt selon la revendication 1, caractérisé en ce qu'entre la base (9) et la patte (11; 18; 35-39) est disposée une pièce médiane (10) qui est de préférence triangulaire, un côté du triangle étant adjacent à la base et se raccordant à celle-ci tandis que l'autre côté du triangle, de préférence l'hypoténuse, est adjacent à la patte et se raccorde à celle-ci tandis que le côté de triangle restant est libre.

3. Dispositif d'arrêt selon la revendication 2, caractérisé en ce que la pièce médiane (10) et la base (9) forment un angle de 60° à 180° et de préférence de 90° à 120°, et/ou en ce que la pièce médiane et la patte (11; 18; 35-39) forment un angle d'environ 120°.

4. Dispositif d'arrêt selon la revendication 1, caractérisé en ce que les languettes (12; 19, 20; 26,

27; 32, 33) sont séparées les unes des autres par des fentes (13) qui s'étendent depuis l'extrémité libre de la patte en direction du rattachement de patte mais de préférence sans traverser celui-ci.

5. Dispositif d'arrêt selon la revendication 2, caractérisé en ce que, dans la pièce médiane (10) réalisée sous forme de triangle, le côté de triangle extérieur, qui coïncide avec la ligne de raccordement de la patte (11; 18; 35-39), s'étend sensiblement parallèlement à l'axe central de la soupape ou analogue (2) ou de l'orifice (7) ou en étant faiblement incliné sur cet axe dans le sens s'éloignant de la soupape ou analogue, auquel cas une ligne, passant par les pointes de languette (14; 17; 22; 28-30; 34), s'étend de préférence approximativement parallèlement au côté de triangle ou à la ligne de raccordement cité.

6. Dispositif d'arrêt selon l'une des revendications 1-5, caractérisé en ce qu'en cas d'agencement de plusieurs organes d'ancrage (8), ceux-ci sont, de façon connue en soi, orientés dans le même sens en direction périhérique pour permettre l'introduction et la sortie ou le vissage et le dévissage du dispositif d'arrêt et en ce que le côté longitudinal externe de la languette la plus extérieure, orientée du côté opposé à la base (9), s'étend obliquement en direction de la pointe de languette concernée en se rapprochant de la soupape ou analogue (2), de sorte que le rattachement de languette concerné pénètre d'abord dans l'orifice (7) lors de la fixation de la soupape ou analogue.

7. Dispositif d'arrêt selon la revendication 1, caractérisé en ce que les languettes (12; 19, 20; 26-27; 32, 33) sont réalisées avec différentes largeurs.

8. Dispositif d'arrêt selon la revendication 1, caractérisé en ce que les pointes de languette (14; 17; 24; 28-30) sont disposées symétriquement sur les languettes concernées (12; 19, 20; 26, 27).

9. Dispositif d'arrêt selon la revendication 1, caractérisé en ce que les pointes de languette (22; 34) sont disposées asymétriquement sur les languettes concernées (12; 32, 33).

10. Dispositif d'arrêt selon l'une des revendications 1-9, caractérisé en ce que les pointes de languette (17; 24; 28-30; 34) sont disposées multiplement sur les languettes concernées (12; 19, 20; 26, 27; 32, 33).

Fig. 1

Fig. 2

Fig. 3

Fig. 4

Fig. 5

**Fig. 6**

**Fig. 7**

**Fig. 8**

**Fig. 9**

**Fig. 10**

**Fig. 11**

**Fig. 12**

*Fig. 13*

*Fig. 14*

*Fig. 16*

*Fig. 15*

*Fig. 17*